# EUROPÄISCHE PATENTANMELDUNG

(11) **EP 1 066 800 A2**
(43) Veröffentlichungstag der Anmeldung: **10.01.2001**
(21) Anmeldenummer: 00112369.4
(22) Anmeldetag: 09.06.2000
(51) Int. Cl.: A61C 3/14

(54) **Werkzeug zum Entfernen von Zahnwurzeln im Kieferbereich**

(30) Priorität: 08.07.1999 DE 19931734
(71) Anmelder: Essiger, Holger K., Dr., 30900 Wedemark (DE)
(72) Erfinder: Essiger, Holger K., Dr., 30900 Wedemark (DE)
(74) Vertreter: Depmeyer, Lothar

(57) **Zusammenfassung**

Die Erfindung betrifft ein Werkzeug zum Entfernen von Zahnwurzeln im Kieferbereich. Um mit diesem Werkzeug sogar Wurzelspitzen ohne weiteres entfernen zu können, wird erfindungsgemäss ein Werkzeug vorgeschlagen, das im wesentlichen aus einer in den Wurzelkanal einfürbaren Nadel und einem Extraktor besteht, der von der konzentrisch zu ihm angeordneten Nadel vorne überragt und zumindest an seinem freien Ende nach Art eines Gewindebohrers ausgebildet ist in der Weise, dass bei in den Wurzelkanal eingeführter Nadel durch Verdrehen des Extraktors dieser mit der Zahnwurzel eine formschlüssige Verbindung eingeht.

## Beschreibung

Die Erfindung betrifft ein Werkzeug zum Entfernen von Zahnwurzeln, insb. Wurzelresten, im Kieferbereich.

Es lässt sich nicht vermeiden, dass bei einer Zahnbehandlung nach dem Entfernen der Zahnkrone und des Zahnhalses Zahnwurzeln im Zahnfach verbleiben. Besondere Schwierigkeiten ergeben sich, wenn Wurzelreste im unteren Teil des Zahnfaches steckenbleiben und dann entfernt werden müssen. Hierzu ist nämlich ein chirurgischer Eingriff mit einer Knochenbehandlung erforderlich.

Der Erfindung liegt die Aufgabe zugrunde, ein einfaches, jedoch wirksames Werkzeug vorzuschlagen, mit dem sogar Wurzelspitzen ohne weiteres entfernt werden können.

Zur Lösung dieser Aufgabe ist ein Werkzeug der obigen Art vorgesehen, das im wesentlichen aus einer in den Wurzelkanal einführbaren Nadel und einem Extraktor besteht, der von der konzentrisch zu ihm angeordneten Nadel vorne überragt und zumindest an seinem freien, vorderen Ende nach Art eines Gewindebohrers ausgebildet ist in der Weise, dass bei in den Wurzelkanal eingeführter Nadel durch Verdrehen des Extraktors dieser mit der Zahnwurzel ( Wurzelrest ) eine formschlüssige Verbindung eingeht.

Zur Handhabung eines solchen Werkzeuges wird zunächst die steife Nadel geeigneten Durchmessers in die Wurzel eingeführt, um so eine Führung und einen genauen Ansatz für den Extraktor zu ermöglichen. Durch Verdrehen des Extraktors wird nunmehr eine formschlüssige Verbindung zum Wurzelrest hergestellt; dann wird die Extraktion vorgenommen. Unter diesen Voraussetzungen können die Nadel und der Extraktor fest miteinander bzw. einstückig verbunden sein.

Es ist aber auch möglich, das Werkzeug im wesentlichen zweiteilig auszuführen. Dazu erhält der Extraktor eine Längsbohrung. Der Extraktor wird dann auf die in den Wurzelkanal eingeführte Nadel aufgeschoben und beim Aufstossen auf die Wurzel so verdreht, dass die Spitze bzw. das vordere Ende des Extraktors in die Wurzel eindringt, wobei sich das auf dem Extraktor befindliche Gewinde in die Wurzel einschneidet, um so eine vorwiegend formschlüssige Verbindung mit der Wurzel herzustellen. Dadurch wird auch hier die Extraktion der Wurzel ermöglicht.

Weitere Einzelheiten der Erfindung werden anhand der Zeichnung erläutert, in der ein Ausführungsbeispiel der Erfindung dargestellt ist. Es zeigen :

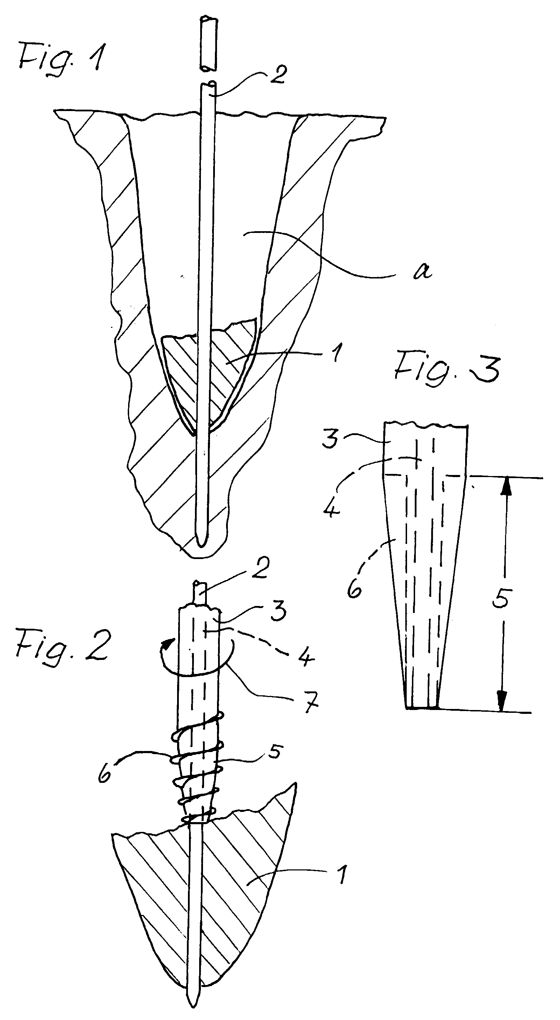

Fig. 1 einen Schnitt durch ein Zahnfach eines Kieferknochens mit einer zu entfernenden Wurzelspitze,
Fig. 2 einen Teilschnitt der Fig. 1 entsprechend und
Fig. 3 das untere Ende eines Extraktors zum Entfernen
einer Wuzelspitze in der Ansicht.

In die noch im Zahnfach a verbliebene Wurzelspitze 1 wird zunächst von eine hoch-elastische, steife Nadel 2 in den Wurzelkanal eingeführt, die beispielsweise aus Nickel-Titan-Draht bestehen kann.

Neben der Nadel 2 ist aufgrund der Erfindung ein rohrförmiger Extraktor 3 erforderlich, dessen zentrale Längsbohrung 4 einen solchen Durchmesser aufweist, dass der Extraktor praktisch spielfrei auf die Nadel 2 aufgeschoben werden kann. Der Extraktor 3 läuft zudem zum freien Ende hin konisch, also sich stark verjüngend aus. Dieser konische Bereich 5 ist aussen mit Vorsprüngen 6 versehen, die den Bereich 5 wendelartig umschliessen.

Der Bereich 5 ist dabei so ausgeführt, dass er nach Art eines Gewindebohrers arbeiten kann, damit er bei einer Drehung im Sinne des Pfeiles 7 gewissermassen in den Wurzelrest hineingeschraubt werden kann. Dabei können die Vorsprünge 6 als Zähne auf einer Schraubenlinie verteilt angeordnet sein, damit sie das Gewinde schneiden können und beim Verdrehen den Vorschub des Extraktors sicherstellen. Zudem können die Vorsprünge so ausgeführt sein, dass sie nach Art eines sog. Einschnittwerkzeuges arbeiten, das Gewinde also in einem Arbeitsgang schneiden. Sie können aber auch eine Zerspanung in zwei oder mehreren Gängen bewirken, wozu natürlich zwei oder mehrere Extraktoren erforderlich sind.

Vorzugsweise wird jedoch der Extraktor im Sinne der Fig. 3 als Einschnittwerkzeug ausgeführt. Von der Spitze des Extraktors aus zum hinteren Ende hin werden die Gewindegänge bzw. die sie bildenden Zähne od. dgl. allmählich grösser, um so ein Einschnittwerkzeug zu bilden, das ein Einschneiden in einem Arbeitsgang gewährleistet.

Unter bestimmten Voraussetzungen und Bedingungen im Hinblick auf die Beschaffenheit des zu entfernenden Zahnrestes kann jedoch auch dann schon ein wünschenswerter Formschluss zwischen Extraktor und Zahnrest erreicht werden, wenn der Extraktor in seinem vorne konischen Endbereich keine schneidende, spanabhebende Wirkung ausübt, sondern mit Hilfe seines vorne befindlichen, vorzugsweise konischen Gewindes dieses in den Zahnrest eindrückt, wie dies z.B. Holzschrauben der Fall ist, die ohne Vorbohren bzw. bei einem zylindrischen Bohrloch aufgrund ihres Gewindes in das Werkstück eindrehbar sind.

Die Tatsache, dass zuerst die Nadel 2 durch Einführen in dien Wurzelspitze 1 gehaltert wird, hat den grossen Vorteil, dass der Extraktor 3 durch die von ihm umschlossene Nadel 2 gegen seitliches Auswandern gesichert ist. Dies bedeutet, dass bei einer Betätigung des Extraktors 3 ein bei Bohrern oft beobachtetes sog. Verlaufen nicht eintreten kann. Die beiden Werkzeuge in Form der Nadel 2 und des Extraktors 3 ergänzen sich also, indem der Extraktor 3 an der Nadel 2 eine seitliche Führung findet.

Wie erwähnt, kann der Extraktor 3 vorne an seinem Gewindeteil mit einer fest angebrachten Nadel 2 versehen sein, die die Aufgabe der Nadel 2 gemäss Zeichnung erfüllt. Ggfs. kann aber auch die Nadel 2 fest in der Längsbohrung 4 gelagert sein.

## Patentansprüche

1. Werkzeug zum Entfernen von Zahnwurzeln, insb. Wurzelresten, dadurch gekennzeichnet, dass es im wesentlichen aus einer in den Wurzelkanal einführbaren Nadel (2) und einem Extraktor (3) besteht, der von der konzentrisch zu ihm angeordneten Nadel vorne überragt ist und zumindest an seinem freien Ende nach Art eines Gewindebohrers ausgebildet ist in der Weise, dass bei im Wurzelkanal eingeführter Nadel durch Verdrehen des Extraktors dieser mit der Zahnwurzel ( Wurzelrest ) eine formschlüssige Verbindung eingeht.

2. Werkzeug nach Anspruch 1, dadurch gekennzeichnet, dass es im wesentlichen aus einer in den Wurzelkanal einführbaren Nadel (2) und und einem Extraktor (3) besteht, der eine zum Aufschieben auf die Nadel ausgebildete Längsbohrung (4) aufweist und zumindest an seinem freien, vorderen Ende (5) nach Art eines Gewindebohrers ausgebildet ist in der Weise, dass der Extraktor durch Verdrehen um die Nadel mit der Zahnwurzel ( Wurzelrest ) formschlüssig verbindbar ist.

3. Werkzeug nach Anspruch 1 und 2, dadurch gekennzeichnet, dass der Extraktor (3) sich zum freien Ende konisch verjüngt.

4. Werkzeug nach Anspruch 1 und 2, dadurch gekennzeichnet, dass die das Gewinde erzeugenden Elemente (6) zum hinteren Ende des Extraktors hin eine allmählich grösser werdende Wirktiefe aufweisen in der Weise, dass die Gewindeerzeugung in einem ( einzigen ) Eindrehvorgang des Extraktors vollzogen wird (Fig. 3).

5. Werkzeug nach Anspruch 1 und 2, dadurch gekennzeichnet, dass der Extraktor (3) an seinem freien Ende ein vorzugsweise konisches Gewinde aufweist, dessen Gänge zumindest vorwiegend ohne Materialwegnahme in die Zahnwurzel eindringen.
